Europäisches Patentamt

European Patent Office

Office européen des brevets

(19)

(11) Veröffentlichungsnummer : **0 347 366 B1**

(12) **EUROPÄISCHE PATENTSCHRIFT**

(45) Veröffentlichungstag der Patentschrift :
**29.07.92 Patentblatt 92/31**

(51) Int. Cl.$^5$ : **B23Q 1/02,** F16M 7/00

(21) Anmeldenummer : **89730108.1**

(22) Anmeldetag : **25.04.89**

(54) Abstützung eines Trägers.

(30) Priorität : **02.06.88 DE 3818922**

(43) Veröffentlichungstag der Anmeldung :
**20.12.89 Patentblatt 89/51**

(45) Bekanntmachung des Hinweises auf die
Patenterteilung :
**29.07.92 Patentblatt 92/31**

(84) Benannte Vertragsstaaten :
**AT CH FR GB IT LI SE**

(56) Entgegenhaltungen :
**EP-A- 0 247 962
EP-A- 0 260 180
DE-A- 3 405 601
DE-C- 3 412 551
GB-A- 287 422
GB-A- 1 086 605
US-A- 2 239 103
US-A- 3 923 086**

(73) Patentinhaber : **MANNESMANN
Aktiengesellschaft
Mannesmannufer 2
W-4000 Düsseldorf 1 (DE)**

(72) Erfinder : **Becker, Eberhard
Max-Planck-Strasse 60
W-5900 Hagen 1 (DE)**
Erfinder : **Sprung, Hartwig
Am Brasberg 71
W-5802 Wetter 4 (DE)**
Erfinder : **Staggl, Roland, Ing. (grad.)
Brunnenweg 6
W-5802 Wetter 2 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 347 366 B1

EP 0 347 366 B1

**Beschreibung**

Die Erfindung betrifft ein Roboterportal mit einem Träger oder Träger- Querträger-Rahmen, der sich über Konsolen an neben dem Träger vorhandenen Stützen abstützt, und mit Justierelementen zur dreidimensionalen Ausrichtung des Trägers.

Ein derartige Anordnung ist durch die DE-A-36 18 075 bekannt, wobei ein Rohr durch die Stütze und den Träger geführt ist. Diese Abstützung bietet zwar durch Justierelemente an der Stützen-Fußplatte eine ausreichende, dreidimensionale Justiermöglichkeit für den Träger, jedoch ist die Montage aufwendig, weil mit mindestens zwei Personen gleichzeitig die Stütze unten justiert und oben ihre Lage überprüft werden muß und weil die Stützen-Fußplatte nach dem Ausrichten mit Vergußmörtel untergossen werden muß.

Die weitere Montage der Träger mit den durch sie getragenen Elementen kann im Normalfall erst erfolgen, wenn der Vergußmörtel nach ca. 24 Stunden belastbar ist. Weiterhin ist auch nachteilig, daß bei dieser Ausführung für die Montage der Stütze der Träger bereits vorhanden sein muß.

Aufgabe der Erfindung ist es daher, die Verbindung zwischen Stützen und Träger so zu gestalten, daß die Montage vereinfacht wird und die Stützen bereits vor der Montage der Träger aufgestellt werden können. Diese Aufgabe wird durch die Merkmale des Anspruchs 1 gelöst. Die Verstellung erfolgt an einwandfrei stehenden Stützen, wobei die Monteure beim Verstellen der Konsolen die Auswirkung der Justierarbeit auf den Träger selbst überwachen können.

Die Konsolen sind in Richtung der Achsen y und z verschiebbar und um die Achse x verdrehbar an der Stütze angeordnet, und eine Verschiebung des Trägers oder Träger-/Querträger-Rahmens ist in Richtung x mittels der Einschiebenuten des Trägers möglich, so daß ein Träger oder Träger-/Querträger-Rahmen gegenüber den ihm zugeordneten und zuvor mit dem Boden verbundenen Stützen mit Hilfe von einer oder mehreren Konsolen je Stütze sowohl dreidimensional verschoben als auch dreidimensional verdreht werden kann.

Zum Erleichtern der Arbeit sind erfindungsgemäß an den Stützen Justiervorrichtungen für die Konsolen angebracht sein, die vorzugsweise mit Abstand voneinander mindestens zwei Klemmbohrungen für durch die Seitenwänder der Stütze geführte Klemmschrauben haben können. Für diese liegen an der Wand der Stütze mit Gewinden versehene Gegenlaschen an. Die zum Durchlassen der Schrauben erforderlichen Durchgangsbohrungen in den Seitenwänden der Stützen sind um das größtmögliche Verstellmaß größer als der Durchmesser der Klemmschrauben, so daß diese die Ausrichtbewegung der Konsolen nicht behindern. Zur Sicherheit können nach dem Ausrichten der Konsolen durch diese, die Wände der Stützen und die Gegenlaschen Stiftlöcher für einzusetzende Stifte gebohrt werden. Zur Befestigung des Trägers können die Konsolen einen über den Träger reichenden Kragarm haben.

Damit der Träger gegenüber der Stütze mit der Konsole auch in Längsrichtung verschiebbar ist, hat der Träger Einschiebenuten für Nutensteine von Schrauben, die durch Bohrungen des Kragarms oder, wenn es eine Seitennut ist, durch eine nach unten gerichtete Konsollasche der Konsole geführt sind. Vorzugsweise ist auf jeder Seite der Stütze eine Konsole angeordnet.

Die eingangs erwähnte Justiervorrichtung ist nach der Erfindung L-förmig ausgebildet und mittels Schrauben an der Stütze befestigt. Sie hat drei Schrauben, die von unten und von der Seite an der Konsole anliegen. Es kann eine Justierschraube durch den unteren Schenkel der L-förmigen Justiervorrichtung ragen, während eine weitere unten waagerecht durch den senkrechten Schenkel führt und die dritte am oberen Ende durch ein senkrechtes Langloch des Schenkels geführt ist und in eine Gewindebohrung der Konsole einschraubbar ist. Diese obere Schraube kann mit einer Mutter versehen sein, damit die locker im Langloch liegende Justierschraube nicht herausfallen kann. Ein Kugelscheibenpaar unter dem Kopf der Schraube hält diese biegefrei.

Es ist ratsam, die kastenförmige Stütze am oberen Ende mittels einer Deckplatte abzudecken, die jedoch ein von einem Handlochdeckel abschließbares Handloch haben soll, damit man die Gegenlaschen zum Einführen der Klemmschrauben für die Konsolen in die passende Lage bringen kann.

Ein Ausführungsbeispiel der Erfindung ist in den Zeichnungen dargestellt und im folgenden erläutert. Es zeigen

Fig. 1 eine Stütze mit Konsole und der Stirnansicht eines angedeuteten Trägers,
Fig. 2 die Seitenansicht von Fig. 1 aus Richtung A,
Fig. 3 eine Stütze ensprechend Fig. 1, jedoch mit verkanteter Konsole und Justiervorrichtung,
Fig. 4 die Justiervorrichtung aus Fig. 3 in größerem Maßstab,
Fig. 5 die Seitenansicht von Fig. 4 aus Richtung B,
Fig. 6 ein Linienportal eines Roboters in perspektivischer Darstellung
Fig. 7 ein Flächenportal eines Roboters in perspektivischer Darstellung,
Fig. 8 eine perspektivische Darstellung eines Flächenportals im Schema mit zugeordnetem Bewegungs-Koordinatensystem.

Der Boden 1 hat Dübelbohrungen 2 für Bodenschrauben 3, die durch eine Fußplatte 4 der Stütze 5 geführt

2

sind. Diese hat am oberen Ende eine Deckplatte 6 mit Handloch und Handlochdeckel 7 zum Zugang zu Gegenlaschen 8 im Inneren der aus einem Kastenprofil bestehenden Stütze 5. Die Gegenlaschen 8 haben übereinander zwei Bohrungen 9 mit Setzmuttern 10 für Klemmschrauben 11 zum Anpressen von Konsolen 12 auf beiden Seiten an die Stütze 5. Jede Konsole ragt mit einem Kragarm 13 bis über einen Träger 17 und mit einer Konsollasche 14 bis zur Unterkante des Trägers 17. Dieser hat Einschiebenuten 18 für Nutensteine 19 von Schrauben 20 zur Befestigung am Kragarm 13 bzw. Konsollasche 14, die Bohrungen 15 für die Schrauben 20 haben.

Zur Befestigung an den Stützen 5 haben die Konsolen 12 klemmbohrungen 16 für die bereits erwähnten Klemmschrauben 11. Um das Ausrichten der mit den Trägern 17 versehenen Konsolen 12 zu ermöglichen, haben die Wände der Stützen 5 Durchgangslöcher 21, die so groß sind, daß sich die Klemmschrauben 11 um das erforderliche Ausrichtmaß darin bewegen lassen.

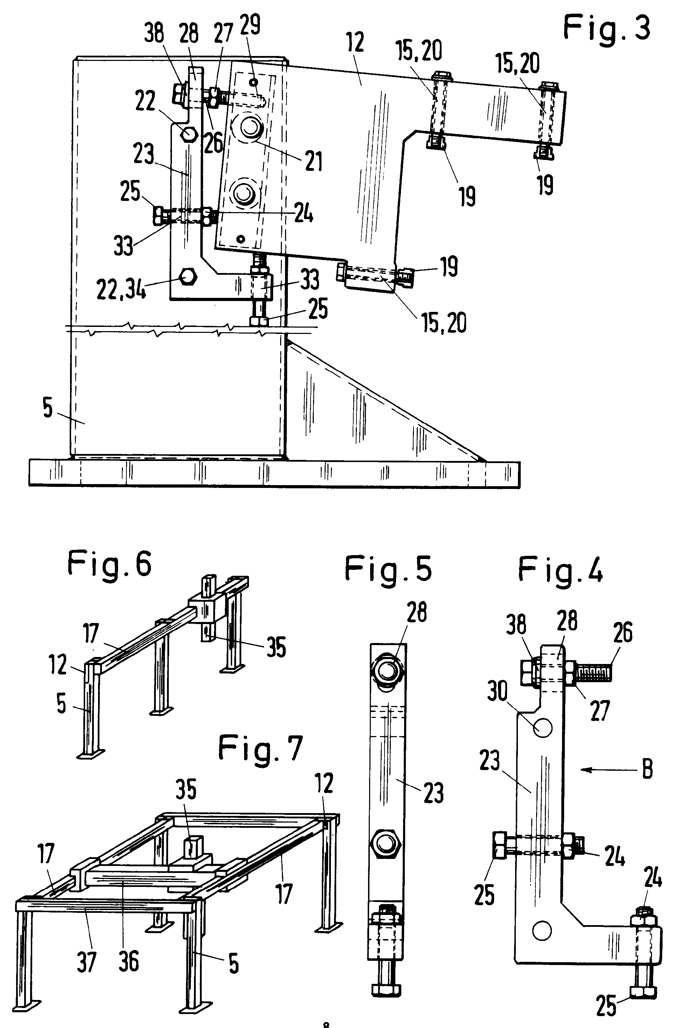

Fig. 3 zeigt, daß zum Justieren der Konsolen 12 an den Stützen 5 L-förmige Justiervorrichtungen 23 mittels Schrauben 22 befestigt sind. Der L-Schenkel der Justiervorrichtung 23 hat im unteren Bereich waagerechte und senkrechte Bohrungen 33 mit Setzmuttern 24 für Justierschrauben 25. Im oberen Bereich des L-Schenkels hat die Justiervorrichtung 23 ein in Fig. 5 erkennbares senkrechtes Langloch 28 für eine darin bewegliche Pendel-Justierschraube 26. Diese wird von einer Mutter 27 gegen unbeabsichtigtes Herausfallen gesichert und ragt mit ihrem Gewinde in eine Gewindebohrung 29 der Konsole 12 hinein. Zwischen dem Kopf der Pendel-Justierschraube 26 und der Justiervorrichtung 23 sorgt ein Kugelscheibenpaar 38 für die notwendige Winkelanpassung.

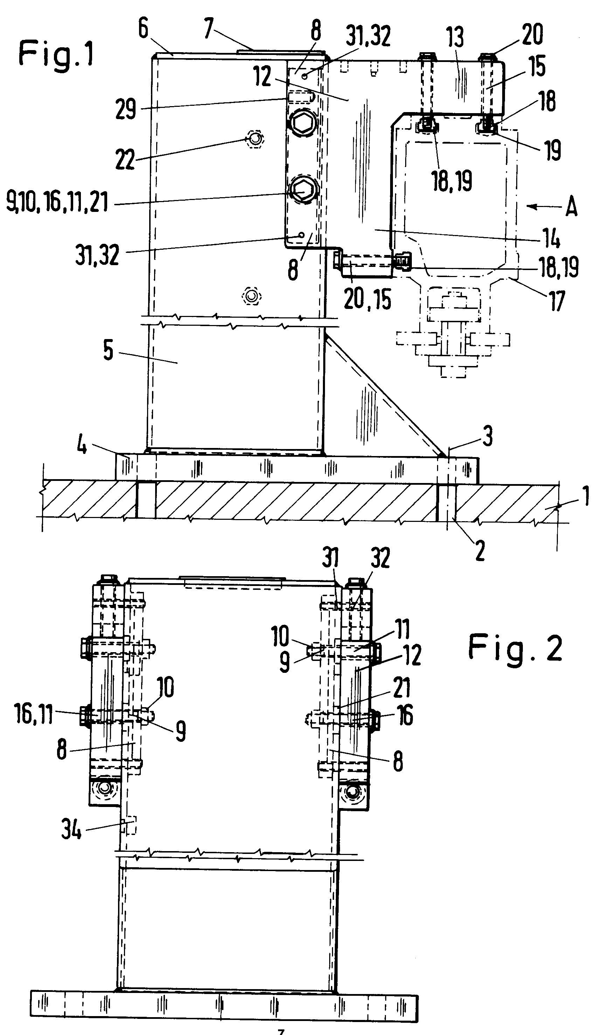

Nach dem Ausrichten des Trägers 17 eines Linienportals nach Fig. 6 oder aller Träger 17 mit Querträgern 37 eines Flächenportals nach Fig. 7 über die Konsolen 12 an den Stützen 5 werden die Klemmschrauben 11 festgezogen. Zur Sicherheit können durch die Konsolen 12, die Wände der Stützen 5 und durch die darin angeordneten Gegenlaschen 8 kleine Stiftlöcher 31 für dünne Stifte 32 von Hand gebohrt werden. Danach können die in Fig. 1 gezeichneten Schrauben 22 aus ihren Gewindebohrungen 34 der Stützen 5 herausgeschraubt und die Justiervorrichtungen 23 entfernt und bei der Montage eines anderen Portals wieder verwendet werden.

Die über die Konsolen 12 ausgerichteten Träger 17 bilden eine einwandfreie Führung für die Hubsäule 35 bzw. beim Flächenportal für den Querfahrträger 36 mit der Hubsäule 35. Die Querträger 37 des Flächenportals werden im Werk als Distanzelemente zwischen die Enden der Träger 17 geschraubt und verstiftet, so daß sie nach der Erprobung zum Transport wieder gelöst und vor dem Ausrichten gegenüber den bereits fest aufgestellten Stützen mittels Arretiermittel, wie z.B. Stiften, in den Werks-Erprobungs-Zustand zurückversetzt werden können. Der so abgesicherte, biegesteife Träger-/Querträger-Rahmen 17/37 wird als Einheit zwischen den Stützen ausgerichtet und nach dem Befestigen der Konsolen 12 mittels der Schrauben 20,11 durch die Stifte 32 gesichert.

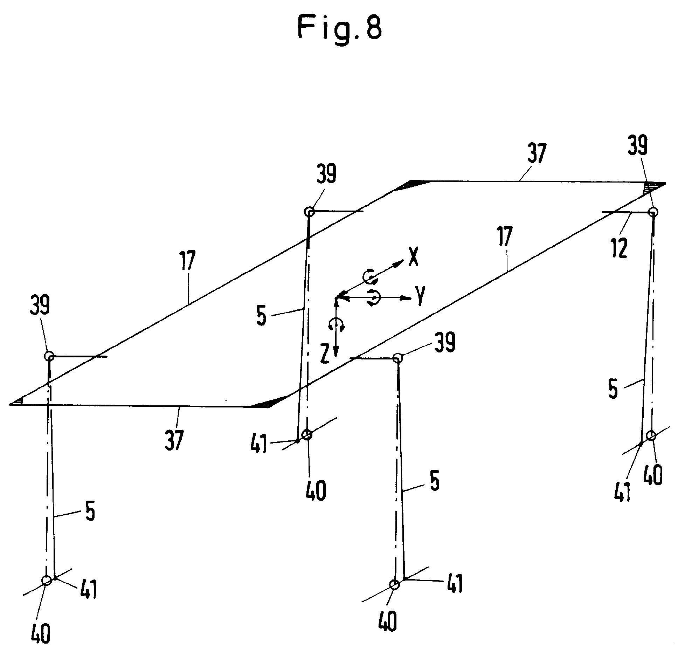

Fig. 8 zeigt den systematischen Zusammenhang der Abstützungsausführung mit den Achsen x, y und z. Beim Aufdübeln der Stützen 5, die wegen unebenem Boden oder schief angeschweißten Fußplatten schiefstehen können, ist beim Ausrichten nur darauf zu achten, daß die oberen Stützenden in den Sollanschlußpunkten 39 mit ihren Konsolen 12 die richtigte Höhen-, Seiten- sowie Winkellage zueinander haben. Demzufolge ist eine vertretbare Lageabweichung zwischen den Sollaufsetzpunkten 40 und zugeordneten Istaufsetzpunkten 41 nicht störend, wenn der zuvor erprobte Träger 17 oder Träger-/Querträger-Rahmen 17/37 als biegesteife Einheit zu einem späteren Zeitpunkt zwischen den vormontierten Stützen 5 ausgerichtet, befestigt und arretiert wird.

## Patentansprüche

1. Roboterportal mit einem Träger (17) oder Träger-Querträger-Rahmen (17,37), der sich über Konsolen (12) an neben dem Träger vorhandenen Stützen (5) abstützt, und mit Justierelementen zur dreidimensionalen Ausrichtung des Trägers,
dadurch gekennzeichnet,
– daß die Konsolen (12) verstellbar neben den Stützen (5) angeordnet sind,
– daß die Konsolen (12) in Richtung der Achsen y und z verschiebbar und um die Achse x verdrehbar an den Stützen (5) angeordnet sind und eine Verschiebung des Trägers (17) oder Träger- Querträger-Rahmens (17,37) in Richtung x mittels der Einschiebenuten (18) des Trägers (17) möglich ist,
– daß an den Stützten (5) L-formig ausgebildete Justiervorrichtungen (23) für die Konsolen (12) mittels Schrauben (22) befestig sind, die jeweils drei von einer Seite und von unten an der Konsole (12) anliegende Justierschrauben (25,26) aufweisen.
2. Abstützung nach Anspruch 1,
dadurch gekennzeichnet,

daß jede Konsole (12) jeweils mindestens eine Klemmbohrung (16) für eine durch eine ebene Seitenwand der Stütze (5) geführte Klemmschraube (11) hat, für die eine mit einem Gewinde versehene Gegenlasche (8) klemmend an der Stützenwand anliegt und daß eine Durchgangsbohrung (21) in der Seitenwand der Stütze (5) um das größtmögliche Verstellmaß größer ist als der Durchmesser der Klemmschraube (11).

3. Abstützung nach Anspruch 2,
dadurch gekennzeichnet,
daß die Konsolen (12), die Wände der Stützen (5) und die Gegenlaschen (8) Stiftlöcher (31) für Stifte (32) haben.

4. Abstützung nach Anspruch 2,
dadurch gekennzeichnet,
daß die Konsolen (12) über den Träger (17) reichende Kragarme (13) haben, an denen der Längsträger (17) mit in seine Einschiebenuten (18) eingesetzten Nutensteinen (19) mittels Schrauben (20) befestigt ist.

5. Abstützung nach Anspruch 2,
dadurch gekennzeichnet,
daß die Konsolen (12) nach unten gerichtete Konsollaschen (14) für mindestens eine Schraube (20) haben, an der der Längsträger (17) über einen in seine Einschiebenut (18) eingesetzten Nutenstein (19) der Schraube (20) befestigt ist.

6. Abstützung nach einem oder mehreren der vorgenannten Ansprüche,
dadurch gekennzeichnet,
daß auf jeder Seite der Stütze (5) eine Konsole (11) vorhanden ist.

7. Abstützung nach Anspruch 1,
dadurch gekennzeichnet,
daß eine Justierschraube (25) durch den unteren Schenkel der L-förmigen Justiervorrichtung (23) ragt, eine weitere untere waagerecht durch den senkrechten Schenkel und die dritte Justierschraube (26) als obere Pendelschraube durch ein senkrechtes Langloch (30) im waagerechten Schenkel geführt ist und in eine Gewindebohrung (29) der Konsole (12) einschraubbar ist.

8. Abstützung nach Anspruch 7,
dadurch gekennzeichnet,
daß die Justierschrauben (25) durch an der Justiervorrichtung (23) befestigte Setzmuttern (24) geführt sind und daß die Justierschraube (26) über ein Kugelscheibenpaar (38) an der Justiervorrichtung abgestützt und von einer Mutter (27) gesichert ist.

9. Abstützung nach Anspruch 1,
dadurch gekennzeichnet,
daß die Stütze (5) ein Kastenprofil ist und am oberen Ende eine mit einem Handloch versehene Deckplatte (6) hat und daß das Handloch von einem Handlochdeckel (7) abgedeckt ist.


**Revendications**

1. Portique de robot comportant un support (17) ou un châssis constitué de supports et de traverses (17,37), qui s'appuie sur des montants (5) existant en plus du support, par l'intermédiaire de consoles (12), et des éléments d'ajustage pour l'orientation tridimensionnelle du support,
caractérisé en ce que :
   – les consoles (12) sont agencées, de façon réglable, à côté des montants (5),
   – les consoles (12) sont agencées sur les montants (5) en pouvant être déplacées dans la direction des axes y et z et en pouvant tourner autour de l'axe x, et un déplacement du support (17) ou du châssis constitué de supports et de traverses (17,37) est possible dans la direction x au moyen des rainures d'insertion (18) du support (17),
   – des dispositifs d'ajustage (23) en forme de L pour les consoles (12) sont fixés sur les montants (5) au moyen de vis (22), qui, à chaque fois, présentent trois vis d'ajustage (25,26) adjacentes à la console (12) latéralement et du bas.

2. Dispositif d'appui selon la revendication 1,
caractérisé en ce que
chaque console (12) présente au moins un perçage (16) pour une vis de serrage (11) guidée à travers une paroi latérale plane du montant (5), pour laquelle une éclisse (8) munie d'un taraudage s'appuie en serrant contre la paroi du montant, et en ce qu'un perçage de passage (21) dans la paroi latérale du montant (5) est plus grand, de la valeur de réglage la plus grande possible, que le diamètre de la vis de serrage (11).

3. Dispositif d'appui selon la revendication 2,

caractérisé en ce que
les consoles (12), les parois des montants (5) et les éclisses (8) présentent des trous (31) pour des goupilles (32).

4. Dispositif d'appui selon la revendication 2,
caractérisé en ce que
les consoles (12) présentent des bras en porte-à-faux (13), s'étendant au-dessus des supports (17), auxquels le support longitudinal (17) est fixé par des coulisseaux (19), montés dans ses rainures d'insertion (18), au moyen de vis (20).

5. Dispositif d'appui selon la revendication 2,
caractérisé en ce que
les consoles (12) présentent des pattes (14) orientées vers le bas pour au moins une vis, à laquelle le support longitudinal (17) est fixé par un coulisseau (19), monté dans sa rainure d'insertion (18), de la vis (20).

6. Dispositif d'appui selon une ou plusieurs des revendications précédentes,
caractérisé en ce que,
sur chaque côté du montant (5), est prévue une console (12).

7. Dispositif d'appui selon la revendication 1,
caractérisé en ce qu'
une vis d'ajustage (25) traverse l'aile inférieure du dispositif d'ajustage (23) en forme de L, une autre vis inférieure est guidée horizontalement à travers l'aile verticale, et la troisième vis d'ajustage (26), en tant que vis supérieure oscillante, est guidée à travers un trou oblong vertical (30) dans l'aile horizontale, et peut être vissée dans un perçage taraudé (29) de la console (12).

8. Dispositif d'appui selon la revendication 7
caractérisé en ce que
les vis d'ajustage (25) sont guidées à travers des écrous (24) fixés au dispositif d'ajustage (23), et en ce que la vis d'ajustage (26) est supportée contre le dispositif d'ajustage par une paire de rondelles (38) et est fixée par un écrou (27).

9. Dispositif d'appui selon la revendication 1,
caractérisé en ce que
le montant (5) est un profilé en caisson et présente, à l'extrémité supérieure, une plaque de recouvrement (6) muni d'un trou de visite, et en ce que le trou de visite est recouvert par un couvercle (7).


**Claims**

1. A robot portal with a bar (17) or bar-crossbar-frame (17, 37) which is supported via brackets (12) on supports (5) located adjacent to the bar, and with adjusting elements for the three-dimensional alignment of the bar,
characterised in that
  – the brackets (12) are arranged adjustably adjacent to the supports (5),
  – that the brackets (12) are located on the supports (5) so that they can be displaced in the direction of the axes y and z and rotated about the axis x and displacement of the bar (17) or bar-crossbar-frame (17, 37) in the direction x is possible by means of the insertion grooves (18) of the bar (17),
  – that L-shaped adjusting devices (23) for the brackets (12) are attached to the supports (5) by means of screws (22), which devices each have three adjusting screws (25, 26) which bear on the bracket (12) from one side and from below.

2. A support means according to Claim 1,
characterised in that
each bracket (12) has at least one clamping bore (16) for a clamping screw (11) which passes through a flat side wall of the support (5), for which screw a counter-plate (8) provided with a thread bears in clamping fashion on the support wall, and that a through bore (21) in the side wall of the support (5) is larger by the maximum possible amount of adjustment than the diameter of the clamping screw (11).

3. A support means according to Claim 2,
characterised in that
the brackets (12), the walls of the supports (5) and the counter-plates (8) have pinholes (31) for pins (32).

4. A support means according to Claim 2,
characterised in that
the brackets (12) have jibs (13) which extend over the bar (17), to which jibs the longitudinal bar (17) is attached by means of screws (20) with sliding blocks (19) inserted into its insertion grooves (18).

5. A support means according to Claim 2,
characterised in that
the brackets (12) have downward-pointing bracket plates (14) for at least one screw (20), to which the longitudinal bar (17) is attached by means of a sliding block (19) of the screw (20) which is inserted into its insertion groove (18).

6. A support means according to one or more of the preceding Claims,
characterised in that
there is a bracket (11) on either side of the support (5).

7. A support means according to Claim 1,
characterised in that
an adjusting screw (25) projects through the lower arm of the L-shaped adjusting device (23), another lower one passes horizontally through the vertical arm and the third adjusting screw (26) passes as an upper pendular screw through a vertical elongated hole (30) in the horizontal arm and can be screwed into a threaded bore (29) in the bracket (12).

8. A support means according to Claim 7,
characterised in that
the adjusting screws (25) pass through adjusting nuts (24),attached to the adjusting device (23) and that the adjusting screw (26) is supported on the adjusting device via a pair of spherical discs (38) and is secured by a nut (27).

9. A support means according to Claim 1,
characterised in that
the support (5) is a box profile and has a cover plate (6) provided with a hand-hole at the upper end and that the hand-hole is covered by a hand-hole cover (7).

Fig.1

Fig. 2

Fig. 3

Fig. 6

Fig. 5

Fig. 4

Fig. 7

8

# Fig. 8